# EUROPÄISCHE PATENTSCHRIFT

(11) **EP 0 372 454 B1**
(45) Veröffentlichungstag und Bekanntmachung des Hinweises auf die Patenterteilung: **20.01.1993**
(21) Anmeldenummer: 89122326.5
(22) Anmeldetag: 04.12.1989
(51) Int. Cl.: B65G 35/00

(54) **Vorrichtung zum kontinuierlichem Fördern und Drehen von Werkstücken**
Device for continuously transporting and turning work pieces
Dispositif pour transporter et retourner en continu des pièces

(30) Priorität: 06.12.1988 CH 4514/88
(43) Veröffentlichungstag der Anmeldung: 13.06.1990
(73) Patentinhaber: Hunziker, Werner, CH-5054 Kirchleerau (CH)
(72) Erfinder: Hunziker, Werner, CH-5054 Kirchleerau (CH)
(74) Vertreter: Fillinger, Peter, Dr.

(56) Entgegenhaltungen:
- EP-A- 0 289 845
- US-A- 4 238 029

## Beschreibung

Die vorliegende Erfindung bezieht sich auf eine Vorrichtung zum kontinuierlichen Fördern und Drehen von Werkstücken gemäss dem Oberbegriff des Anspruchs 1.

Derartige Vorrichtungen sind beispielsweise bekannt und in den EP-OS'n 205 738 und 289 845 beschrieben.

Bei den bekannten Vorrichtungen sind entweder sämtliche Stäbe oder ein Teil davon endseits in Gelenklagern mit Gelenkpfanne und Gelenkkopf eingespannt. Diese Lagerung hat die Nachteile, dass sie einerseits teuer und anderseits verschleissanfällig ist, wenn die Werkstücke innerhalb des Käfigs mit einem aggressiven Medium, wie zum Beispiel einem Strahlmittel, behandelt werden. Gelangen bei den bekannten Ausführungen Strahlkörner oder Strahlstaub zwischen Gelenkkopf und Gelenkpfanne, wird dieser rasch funktionsunfähig, worauf die einzelnen Stäbe einer Biegebeanspruchung unterworfen werden, die rasch zu einem Ermüdungsbruch führen.

Die vorliegende Erfindung stellt sich die Aufgabe, an einer Vorrichtung der erwähnten Art die genannten Nachteile zu beseitigen.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
Fig. 1 einen Längsschnitt durch eine Vorrichtung längs der Linie I-I in Fig. 2,
Fig. 2 eine Draufsicht auf eine Vorrichtung, wobei Teile weggebrochen sind,
Fig. 3 das Detail III in Fig. 1 in vergrösserter Darstellung und
Fig. 4 eine Draufsicht auf Fig. 3 in Richtung des Pfeiles IV.

In einer Bearbeitungskammer 1, die durch ein Gehäuse 3 begrenzt ist, ist ein um die Achse A drehbar gelagerter Käfig 9 eingesetzt, dessen die Stirnseiten bildenden Endringe 11, 13 ausserhalb der Kammer 1 auf um vertikale Achsen B verschwenkten Führungsscheiben 15, 17 abgestützt sind. Die Führungsscheiben 15, 17 sind an Trägern 19 am Gehäuse 1 gelagert und können mittels verzahnten Haltemitteln 21 in verschiedenen Winkeln αzur Achse A eingestellt und gehalten werden. Die Führungsscheiben 15, 17 können aber auch bei konstanter Schrägstellung zur Achse A, das heisst, einem unveränderbaren spitzen Winkel αfest mit den Trägern 19 verbunden sein. An den Führungsscheiben 15, 17 sind mindestens je drei Rollen 23 gelagert, deren geometrische Achsen sich in einem Punkt auf der Achse A schneiden und drei Rollen 25, deren Achsen rechtwinklig zur Achse B verlaufen. Diese Rollen 23, 25 bilden das Drehlager für die Endringe 11 und 13, die durch den Käfig 9 bildende, an den Endringen 11, 13 befestigte Stäbe, Seile oder Drähte 27 gegeneinander verspannt sind und an die Führungsscheiben 15, 17 herangezogen werden. Am Endring 13 ist peripher ein Kettenzahnkranz 41 angebracht, über den eine Kette oder ein Zahnriemen 43 gelegt ist, der im Eingriff mit einem von einem Motor 45 angetriebenen Ritzel 47 steht.

Die Endringe 11, 13 weisen eine kreisrunde zentrale Öffnung 51 auf. Die den Käfig 9 bildenden Stäbe 27 sind parallel zur Drehachse A und über den ganzen Umfang mit gegenseitigem Abstand angeordnet, dessen Betrag Gewicht und Grösse der zu bearbeitenden Werkstücke 55 angepasst ist.

Der Endring 11 (wie auch der Endring 13) weist zwei Ringe auf, nämlich einen inneren Lagerring 79 mit den Lagerflächen für die Rollen 23, 25 sowie einen koachsialen, mitdrehenden Spannring 81.

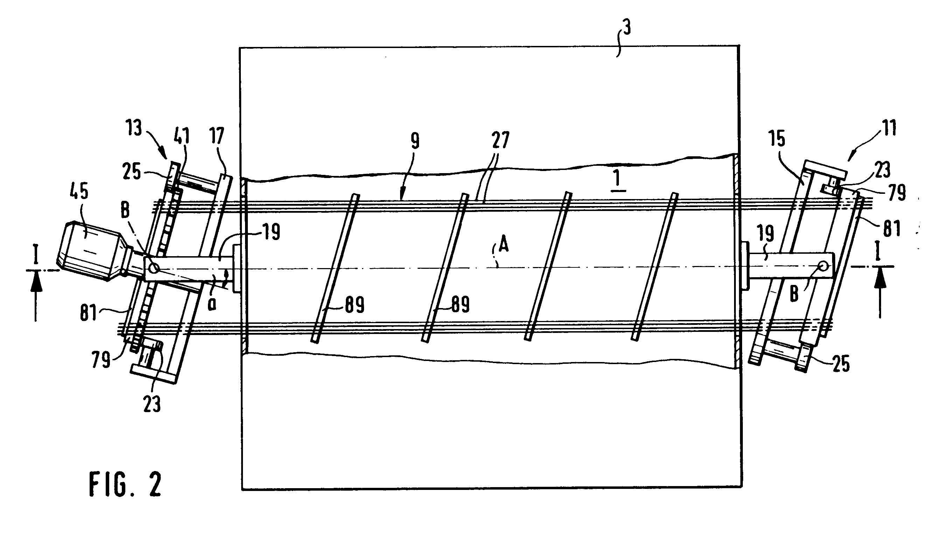

Längs dem Käfig 9 sind die parallel angeordneten Stäbe 27 gegenseitig durch zu den Endringen 11, 13 parallele, voneinander distanzierte Stützringe 89 (Fig. 2 bis 4) gestützt. Diese sind mit Bohrungen 91 versehen, in denen die Stäbe 27 mit Spiel gelagert und durch Distanzhalter 93 gegen eine achsiale Verschiebung gesichert sind.

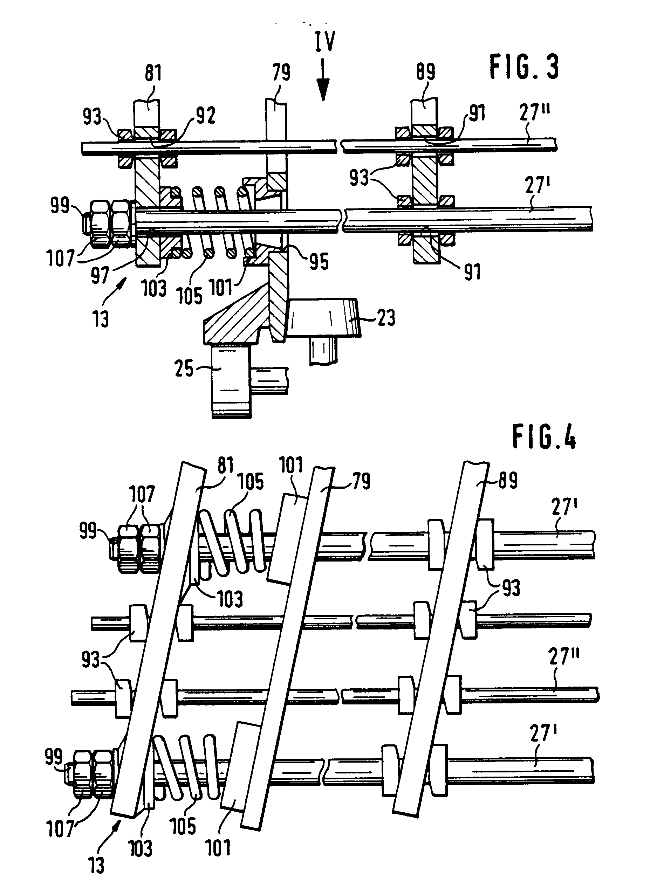

Wie die Fig. 3 und 4 zeigen, sind die Stäbe 27 in äussere Stäbe 27′ und innere Stäbe 27˝ unterteilt. Die äusseren Stäbe 27′ bilden mit den Endringen 11 und 13 das tragende Gerippe des Käfigs 9 und sind im Durchmesser stärker dimensioniert als die inneren. Zudem kann ihr gegenseitiger Abstand ein ganzes Vielfaches von jenem der inneren Stäbe 27˝ betragen und beträgt es vorzugsweise auch.

Die äusseren Stäbe 27′ sind mit grösserem Spiel durch Bohrungen 95 in den Lagerringen 79 und mit kleinerem Spiel durch Bohrungen 97 in den Spannringen 81 hindurchgeführt und an ihren Enden mit einem Gewinde 99 versehen. Das Spiel in den Bohrungen 91, 95 muss so gross sein, dass sich darin die Stäbe 27′ bei drehendem Käfig nicht festklemmen können und eine Biegebeanspruchung erfahren. Jeweils zwei koachsial ausgerichteten Bohrungen 95, 97 sind paarweise zwei Federlager 101, 103 zugeordnet, zwischen denen je eine auf Druck vorgespannte Schraubenfeder 105 mit ihren Enden koachsial zu den anschliessenden Bohrungen 95, 97 gelagert ist. Die Vorspannung der Schraubenfedern 105 und die der äusseren Stäbe 27′ erfolgt mittels auf den Gewinden 99 aufgeschraubten Muttern 107.

Zur Vorspannung der Schraubenfedern 105 und der äusseren Stäbe 27′ ist der Spannring 81 nicht notwendig. Die Muttern 107 können hierfür auch direkt gegen das Federlager 103 verschraubt sein.

Wird aber wie beim gezeigten Beispiel ein Spannring 81 verwendet, so muss dieser hinsichtlich Dimensionierung und Materialwahl (z.B. Polyurethan) so ausgelegt sein, dass er sich unter den auftretenden Spannungen rein elastisch verformen kann. Dies, damit sich seine zwischen den Muttern 107 und den Federlagern 103 eingeklemmten Bereiche bei drehendem Käfig 9 stets durch eine rein elastische Verformung rechtwinklig zu den Stäben 27′ einstellen können (in Fig. 4 erkennbar), ohne auf die Stäbe 27′ ein in Betracht fallendes Biegemoment ausüben zu können. Das heisst, die elastische Nachgiebigkeit des Spannringes 81 muss so gross sein, dass im Betrieb in den äusseren Stäben 27′ keine lastwechselbedingten Ermüdungsbrüche auftreten. Die auf Druck vorgespannten Schraubenfedern 105 und die darauf (mittels dem Spannring 81 und/oder dem Federlager 103) abgestützten, mit dem Stab 27′ fest verbundenen Muttern 107 bilden somit ein Gelenklager für die Stabenden. Dieses Gelenklager ermöglicht es, dass sich die Stäbe 27′ bei hinreichendem Spiel in den Bohrungen 95 praktisch biegungsfrei in Richtung der an ihnen angreifenden achsialen Längszugkräften bei drehendem Käfig einstellen können.

Die inneren Stäbe 27˝ sind mit Spiel in Bohrungen 92 des Spannringes 81 sowie in dazu koachsial ausgerichteten Bohrungen 91 in den Stützringen 89 gelagert. Das Spiel muss so gross sein, dass sich die inneren Stäbe 27˝ bei drehendem Käfig in den Ringen 81, 89 nicht verklemmen können. Die Bohrungen 91, 92 in den Ringen 81, 89 für die Aufnahme der inneren Stäbe 27˝ sind ebenfalls achssymmetrisch um die Drehachse A des Käfigs 9 verteilt. Die lose in diese Bohrungen 91, 92 eingeschobenenen Stäbe 27˝ sind durch aufgeklemmte Distanzhalter 93 gegen eine unerwünschte Längsverschiebung gesichert. Die Distanzhalter 93, die in Berührungskontakt mit den angrenzenden Ringen 81, 89 stehen weisen diesen zugewandt einen konischen Anzug auf, wobei der Anzugswinkel vorzugsweise mindestens gleich dem Winkel α ist, so dass ihre Konusmantelfläche bei drehendem Käfig 9 am benachbarten Ring 81, 89 abwälzen kann.

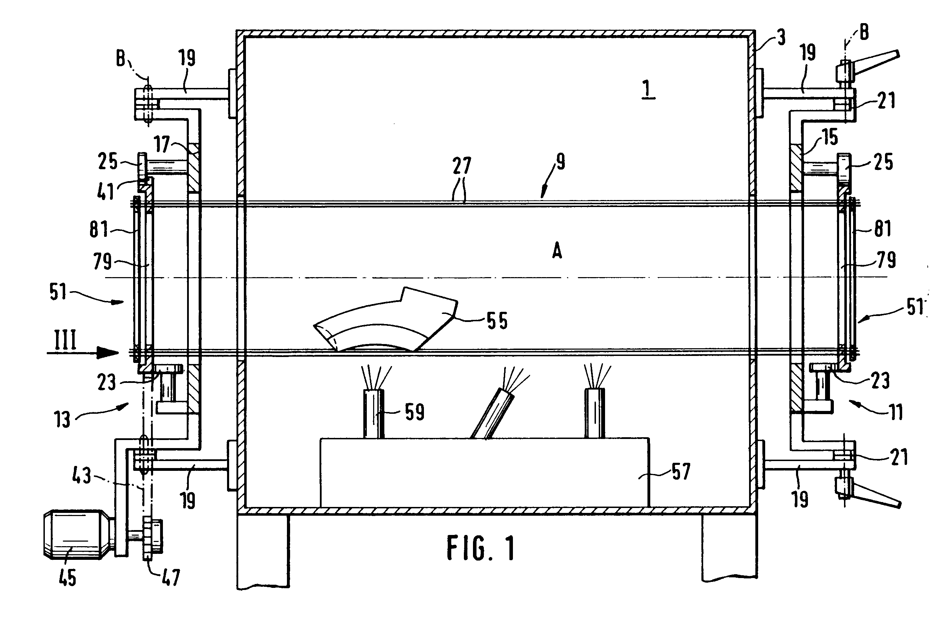

In der Fig. 1 ist stellvertretend für ein Bearbeitungsmittel schematisch eine Strahlanlage 57 mit drei Strahldüsen 59 unterhalb dem Käfig 9 im Gehäuse 3 angeordnet, dessen Strahldüsen 59 durch den Käfig 9 hindurch auf das oder die im Käfig 9 liegenden Werkstücke 55 gerichtet sind.

Im folgenden wird die Funktionsweise der Vorrichtung näher erläutert. Das oder die zu bearbeitenden Werkstücke 55 werden von Hand oder mit einer Transportvorrichtung in den Käfig 9 eingebracht und liegen im Käfig auf den inneren Stäben 27˝.

Die Schrägstellung der beiden Endringe 11, 13 um einen Winkel α zur Achse A bewirkt die axiale Relativbewegung der Stäbe 27.

Diese bewirken einen axialen Vorschub der Werkstücke 55 in der einen oder anderen Richtung, je nach der Drehrichtung und der Lage der Endringe 11, 13. Die Werkstücke 55 können auf diese Weise allseitig und gleichmässig den Strahldüsen 59 ausgesetzt werden, ohne dass sich das Strahlmittel in allfälligen Kavitäten des Werkstückes ansammeln kann. Der Abstand von der vom Strahlmittel beaufschlagten Werkstückoberfläche zu den Strahldüsen 59 bleibt dabei im wesentlichen konstant, unabhängig von der Grösse der Werkstücke, da im wesentlichen nur die auf den Drähten 27 aufliegende, gegen die Strahldüsen 59 gerichtete Oberfläche bearbeitet wird. Mit dem Anstellwinkel α der Endringe 11, 13 und der Drehzahl des Käfigs 9 kann nicht nur die Verweilzeit der Werkstücke 55 innerhalb der Bearbeitungskammer 1, sondern auch die Verweilzeit über der jeweiligen Strahldüse bestimmt werden.

## Patentansprüche

1. Vorrichtung zum kontinuierlichen Fördern und Drehen von Werkstücken (55) mit einem um eine Achse (A) drehbaren Käfig (9), dessen Mantel aus einer Vielzahl von zur Achse (A) parallel verlaufenden Stäben oder Drähten (27, 27′, 27˝) besteht, wobei bei drehendem Käfig wenigstens von der tiefsten Stelle weg und im Bereich der ansteigenden Käfigflanke die Stäbe (27) in Förderrichtung eine längsachsiale Bewegung ausführen und wenigstens ein Teil (27′) der Stäbe (27, 27′, 27˝), die achssymmetrisch um die Achse (A) verteilt sind, endseits an Ringen (79) in Gelenklagern eingespannt und mittels vorgespannter Federn (105) achsial unter Zugspannung gesetzt sind, dadurch gekennzeichnet, dass die die achsiale Zugspannung ausübenden Federn (105) die Gelenklager bilden.

2. Vorrichtung nach Anspruch 1, dadurch gekennzeichnet, dass an beiden Enden der unter Zugspannung stehenden Stäbe (27′) vorgespannte, Gelenklager bildende Federn (105) vorhanden sind.

3. Vorrichtung nach Anspruch 1 oder 2, dadurch gekennzeichnet, dass die Enden der unter Zugspannung stehenden Stäbe (27′) mit Spiel durch Bohrungen (95) in den Ringen (79) hindurch geführt und am Ende mit einem Kopfstück (107) versehen sind, und dass zwischen dem Kopfstück (107) und dem benachbarten Ring (79) jeweils eine auf Druck vorgespannte Schraubenfeder (105) auf den Stab (27′) aufgeschoben ist, die sich mit einem Ende gegen das Kopfstück (107) und mit dem anderen Ende gegen den Ring (79) abstützt.

4. Vorrichtung nach Anspruch 3, dadurch gekennzeichnet, dass die Enden der unter Zugspannung stehenden Stäbe (27′) mit einem Gewinde (99) versehen sind, auf das wenigstens eine Mutter (107) zur Bildung des Kopfstückes aufgeschraubt ist.

5. Vorrichtung nach Anspruch 3 oder 4, dadurch gekennzeichnet, dass zwischen der Schraubenfeder (105) und dem Kopfstück (107) bzw. dem Ring (79) Federlager (101, 103) vorhanden sind.

6. Vorrichtung nach einem der Ansprüche 3 bis 5, dadurch gekennzeichnet, dass zwischen der Schraubenfeder (105) und dem Kopfstück (107) ein als Unterlagsscheibe wirkender, im Bereich der auftretenden Spannungen sich zumindest vorwiegend elastisch verformender Spannring (81) vorhanden ist.

7. Vorrichtung nach Anspruch 6, dadurch gekennzeichnet, dass der Käfig (9) durch achssymmetrisch um die Achse (A) verteilte äussere Stäbe (27′) und innere Stäbe (27˝) gebildet ist, und dass die äusseren Stäbe (27′) auf Zug vorgespannt und die inneren Stäbe (27˝) mit Spiel in Bohrungen (92) in den Spannringen (81) gelagert sind.

8. Vorrichtung nach Anspruch 7, dadurch gekennzeichnet, dass die äusseren und inneren Stäbe (27′, 27˝) zusätzlich durch Stützringe (89) gegenseitig gestützt sind, welche Stützringe (89) Bohrungen aufweisen, die von den Stäben (27′, 27˝) mit Spiel durchsetzt sind.

9. Vorrichtung nach Anspruch 8, dadurch gekennzeichnet, dass zur Lagesicherung der inneren Stäbe (27′) und der stützringe (89) auf den Stäben (27′, 27˝) Distanzhalter (93) aufgeklemmt sind.

## Claims

1. Apparatus for the continuous conveying and turning of workpieces (55) with a cage (9) which is rotatable about an axis (A) and whose periphery consists of a plurality of rods or wires (27, 27′, 27˝) disposed parallel to the axis (A), in which apparatus when the cage rotates, at least away from the lowest region and in the region of the rising cage flank, the rods (27) carry out a longitudinal axial movement in the conveying direction, and at least some (27′) of the rods (27, 27′, 27˝), which are distributed in axially symmetrical manner about the axis (A), are clamped at the ends on rings (79) in articulated-joint bearings and are subjected to tensile stress axially by means of preloaded springs (105), characterised in that the springs (105) exerting the axial tensile stress form the articulated-joint bearings.

2. Apparatus according to claim 1, characterised in that preloaded springs (105) forming articulated-joint bearings are provided at both ends of the rods (27′) subjected to tensile stress.

3. Apparatus according to claim 1 or 2, characterised in that the ends of the rods (27′) subjected to tensile stress are guided with some clearance through holes (95) in the rings (79) and are provided at the end with a head element (107) and that between the head element (107) and the adjacent ring (79) in each case a helical spring (105) subjected to compression pre-load is fitted on to the rod (27′),said helical spring bearing with one end against the head element (107) and with the other against the ring (79).

4. Apparatus according to claim 1, characterised in that the ends of the rods (27′) subjected to tensile stress are provided with a screwthread (99) on to which at least one nut (107) is screwed to form the head element.

5. Apparatus according to claim 3 or 4, characterised in that spring bearings (101,103) are provided between the helical spring (105) and the head element (107).

6. Apparatus according to one of claims 3 to 5, characterised in that between the helical spring (105) and the head element (107) there is arranged a clamping ring (81) which acts as a washer and which is deformed at least predominantly elastically in the range of stresses which occur.

7. Apparatus according to claim 6, characterised in that the cage (9) is formed of inner rods (27˝) and outer rods (27′) which are distributed in axially symmetrical manner about the axis (A), and that the outer rods (27′) are subjected to tensile preload and the inner rods (27˝) are mounted with some clearance in holes (92) in the clamping rings (81).

8. Apparatus according to claim 7, characterised in that the outer and inner rods (27′, 27˝) are additionally supported relatively to one another by supporting rings (89), which supporting rings (89) have holes through which the rods (27′, 27˝) extend with some clearance.

9. Apparatus according to claim 8, characterised in that to secure the positions of the inner rods (27′) and the supporting rings (89), spacer elements (93) are clamped on to the rods (27′, 27˝).

## Revendications

1. Dispositif pour transporter et retourner en continu des pièces (55) avec une cage (9) pouvant tourner autour d'un axe (A), dont l'enveloppe consiste en une multiplicité de bâtonnets ou de fils (27, 27′, 27˝) s'étendant parallèlement à l'axe (A), dispositif dans lequel dans le cas d'une cage tournante les bâtons (27) exécutent un mouvement axial longitudinal dans le sens du transport en s'éloignant au moins de la position la plus enfoncée et dans la zone des flancs montants de la cage et au moins une partie (27′) des bâtons (27, 27′, 27˝), qui sont répartis autour de l'axe (A) de façon symétrique par rapport à celui-ci, est bloquée aux extrémités sur des bagues (79) dans des appuis mobiles libres et est mise en tension axialement au moyen de ressorts précontraints (105), dispositif caractérisé en ce que les ressorts (105) exerçant la force de traction axiale constituent les appuis mobiles libres.

2. Dispositif selon la revendication 1, caractérisé en ce qu'aux deux extrémités des bâtons (27′) se trouvant soumis à des forces de traction, se trouvent des ressorts précontraints (105) formant des appuis mobiles libres.

3. Dispositif selon la revendication 1 ou 2, caractérisé en ce que les extrémités des bâtons (27′) se trouvant soumises à des forces de traction sont guidées, avec du jeu, à travers des alésages (95) dans les bagues (79) et sont pourvues au bout d'une pièce de tête (107) et en ce qu'entre la pièce de tête (107) et la bague voisine (79) un ressort hélicoïdal (105) mis préalablement en compression est enfilé sur le bâton (27′), ressort qui s'appuie par une extrémité contre la pièce de tête (107) et par l'autre extrémité contre la bague (79).

4. Dispositif selon la revendication 3, caractérisé en ce que les extrémités des bâtons (27′) se trouvant soumises à des forces de traction sont pourvues d'un filetage (99), sur lequel est vissé au moins un écrou (107) pour former la pièce de tête.

5. Dispositif selon la revendication 3 ou 4, caractérisé en ce qu'entre les ressorts hélicoïdaux (105) et la pièce de tête (107) ou la bague (79) il y a une bride de ressort formant palier (101, 103).

6. Dispositif selon l'une des revendications 3 à 5, caractérisé en ce qu'entre le ressort hélicoïdal (105) et la pièce de tête (107) se trouve un anneau tendeur (81) agissant comme rondelle, se déformant élastiquement au moins de façon prépondérante dans la zone des contraintes qui se produisent.

7. Dispositif selon la revendication 6, caractérisé en ce que la cage (9) est formée par des bâtons (27′) extérieurs répartis symétriquement par rapport à l'axe autour de l'axe (A) et les bâtons intérieurs (27˝) et en ce que les bâtons extérieurs (27′) sont préalablement mis en tension et les bâtons intérieurs (27˝) sont montés avec jeu dans des alésages (92) dans les anneaux tendeurs (81).

8. Dispositif selon la revendication 7, caractérisé en ce que les bâtons extérieurs et intérieurs (27′, 27˝) sont additionnellement soutenus mutuellement par des couronnes d'appui (89), ces couronnes d'appui (89) présentant des alésages qui sont traversés par les bâtons (27′, 27˝) avec du jeu.

9. Dispositif selon la revendication 8, caractérisé en ce que l'on serre sur les bâtons (27′, 27˝) des écarteurs (93) pour fixer en position les bâtons intérieurs (27′) et les couronnes d'appui (89).
